# EUROPÄISCHE PATENTSCHRIFT

(11) **EP 2 139 361 B1**
(45) Veröffentlichungstag und Bekanntmachung des Hinweises auf die Patenterteilung: **11.09.2013**
(21) Anmeldenummer: 07856603.1
(22) Anmeldetag: 12.12.2007
(51) Int. Cl.: A47B 88/04

(54) **ELEKTROMOTORISCHER MÖBELANTRIEB**
ELECTROMOTIVE FURNITURE DRIVE
ENTRAÎNEMENT DE MEUBLE À MOTEUR ÉLECTRIQUE

(30) Priorität: 21.03.2007 DE 202007004337 U
(43) Veröffentlichungstag der Anmeldung: 06.01.2010
(73) Patentinhaber: Linrot Holding AG, 8002 Zürich (CH)
(72) Erfinder: SCHNEIDER, Johannes, 32278 Kirchlengern (DE)
(74) Vertreter: Wagner, Carsten
(86) Internationale Anmeldenummer: PCT/EP2007/010855
(87) Internationale Veröffentlichungsnummer: WO 2008/113401

(56) Entgegenhaltungen:
- EP-A- 1 886 599
- WO-A-2006/029894
- US-A1- 2004 100 169

## Beschreibung

Die Erfindung betrifft einen elektromotorischen Möbelantrieb der im Oberbegriff des Anspruchs 1 genannten Art zum Verstellen von Teilen eines Möbels relativ zueinander, insbesondere einer Schublade relativ zu einem Korpus eines Schrankes.

Derartige Möbelantriebe sind allgemein bekannt, beispielsweise durch DE 10 17 531, oder WO2006/029894.

Durch AT 413 631 B ist ein elektromotorischer Möbelantrieb zum Verstellen von Teilen eines Möbels relativ zueinander, insbesondere einer Schublade relativ zu einem Korpus eines Schrankes, bekannt, der eine Antriebseinheit aufweist, deren Abtriebselement in Montageposition des Möbelantriebs mit einem zu verstellenden Teil des Möbels in Kraftübertragungsverbindung steht. Bei dem bekannten Möbelantrieb ist die Antriebseinheit als Zahnstangentrieb ausgebildet, der ein mit einem Elektromotor der Antriebseinheit in Drehantriebsverbindung stehendes Zahnrad aufweist, das in Eingriff mit einer Zahnstange steht, die das Abtriebselement des Möbelantriebs bildet und mit einem Korpus einer Schublade derart verbunden ist, daß die Schublade relativ zu dem Korpus des Möbels entsprechend der Drehrichtung des Zahnrades aus- oder einziehbar ist.

Ein Nachteil des bekannten Möbelantriebs besteht darin, daß er hinsichtlich seiner Anordnung an dem Korpus des Möbels nur geringe Freiheiten bietet, da die Zahnstange an der Schublade befestigt ist und sich das Zahnrad in jeder Verstellposition der Schublade in Eingriff mit der Zahnstange befinden muß.

Der Erfindung liegt die Aufgabe zugrunde, einen elektromotorischen Möbelantrieb der im Oberbegriff des Anspruchs 1 genannten Art anzugeben, der die Nachteile des bekannten Möbelantriebs nicht aufweist, bei dem also die Freiheiten hinsichtlich der Anordnung des Möbelantriebs an dem Möbel erhöht sind.

Diese Aufgabe wird durch die im Anspruch 1 angegebene Lehre gelöst.

Der Grundgedanke der erfindungsgemäßen Lehre besteht darin, zur Herstellung einer Kraftübertragungsverbindung zwischen dem Abtriebselement der Antriebseinheit und dem zu verstellenden Teil des Möbels ein biegsames Kraftübertragungselement vorzusehen, das jedoch gleichzeitig auf Zug und Druck beanspruchbar ist.

Durch die Biegsamkeit des Kraftübertragungselementes ist es erfindungsgemäß ermöglicht, das Kraftübertragungselement umzulenken. Aufgrunddessen kann die Antriebseinheit des Möbelantriebes an einer nahezu beliebigen Stelle des Möbels angeordnet sein, wobei die Kraftübertragungsverbindung zwischen dem Abtriebselement der Antriebseinheit und dem zu verstellenden Teil des Möbels über das biegsame Kraftübertragungselement hergestellt ist. Dadurch, daß das Kraftübertragungselement sowohl auf Zug als auch auf Druck beanspruchbar ist, können mittels des erfindungsgemäßen Möbelantriebs sowohl Verstellbewegungen ausgeführt werden, bei denen das Kraftübertragungselement auf Druck beansprucht ist, beispielsweise ein Ausfahren einer Schublade, als auch Verstellbewegungen, bei denen das Kraftübertragungselement auf Zug beansprucht ist, beispielsweise ein Einfahren einer Schublade.

Der erfindungsgemäße Möbelantrieb ist relativ einfach und kostengünstig herstellbar und robust.

Der erfindungsgemäße Möbelantrieb ist zum Verstellen beliebiger Teile eines Möbels geeignet, soweit die hierfür erforderlichen Verstellkräfte von dem Kraftübertragungselement übertragen werden können. Besonders gut ist der erfindungsgemäße Möbelantrieb zum Verstellen von Auszügen, insbesondere Schubladen, relativ zu einem Korpus eines Schrankes, geeignet. Dadurch, daß das Kraftübertragungselement biegsam ist und somit umgelenkt werden kann, ist es erfindungsgemäß beispielsweise möglich, das Gehäuse des Möbelantriebs an einer Rückwand eines Schrankes zu befestigen, während ein der zu verstellenden Schublade zugewandtes Ende des Kraftübertragungselementes an der Schublade festgelegt ist. Der erfindungsgemäße Möbelantrieb ist relativ einfach und kostengünstig herstellbar und robust im Aufbau.

Eine vorteilhafte Weiterbildung der erfindungsgemäßen Lehre sieht vor, daß ein dem zu verstellenden Teil des Möbels zugewandtes erstes Ende des Kraftübertragungselementes an dem zu verstellenden Teil des Möbels festgelegt ist. Das erste Ende des Kraftübertragungselementes kann beispielsweise mittels eines geeigneten Beschlages an dem zu verstellenden Teil des Möbels befestigt sein. Erfindungsgemäß ist es jedoch auch möglich, das zweite Ende des Kraftübertragungselementes in Verstellrichtung mit Spiel mit dem zu verstellenden Teil des Möbels zu verbinden. Auf diese Weise findet am Ende einer Verstellbewegung, beispielsweise beim Einziehen einer Schublade, eine Entkopplung der Schublade von der Antriebseinheit statt, wobei sich die Schublade nach erfolgter Entkopplung aufgrund ihrer Massenträgheit weiter in Richtung auf die eingezogene Position bewegt. Da die Schublade im Bereich der Endlage dieser Bewegung von der Antriebseinheit entkoppelt ist, ist das Risiko vermieden, daß ein Körperteil eines Benutzers unter der Einwirkung der Antriebskraft der Antriebseinheit zwischen der Schublade und dem Korpus des Möbels eingeklemmt wird.

Grundsätzlich kann erfindungsgemäß ein dem zu verstellenden Teil des Möbels abgewandetes zweites Ende des Kraftübertragungselementes an dem Abtriebselement festgelegt sein. So kann das Abtriebselement beispielsweise als drehantreibbare Wickeltrommel ausgebildet sein, auf der das Kraftübertragungselement aufwickelbar und von der das Kraftübertragungselement abwickelbar ist. Eine vorteilhafte Weiterbildung der erfindungsgemäßen Lehre sieht vor, daß ein dem zu verstellenden Teil des Möbels abgewandtes zweites Ende des Kraftübertragungselementes relativ zu dem Abtriebselement beweglich ist und daß das Kraftübertragungselement durch Anpreßmittel an wenigstens einer Anpreßstelle in Kraftübertragungsverbindung mit dem Abtriebselement gehalten ist. Bei dieser Ausführungsform ist ein Austausch des Kraftübertragungselementes, beispielsweise im Falle einer Beschädigung, wesentlich vereinfacht.

Eine vorteilhafte Weiterbildung der vorgenannten Ausführungsform sieht vor, daß ein zwischen der Anpreßstelle und dem zweiten Ende des Kraftübertragungselementes liegender unbelasteter Teil des Kraftübertragungselementes von einer Aufnahmevorrichtung aufnehmbar ist. Bei dieser Ausführungsform wird der unbelastete Teil des Kraftübertragungselementes geordnet in der Aufnahmevorrichtung aufgenommen.

Eine vorteilhafte Weiterbildung der vorgenannten Ausführungsform sieht vor, daß die Aufnahmevorrichtung einen trommelartigen Aufnahmebehälter aufweist, in den das zweite Ende des Kraftübertragungselementes spiralförmig hineinbewegbar ist. Bei dieser Ausführungsform legt sich das Kraftübertragungselement bei einer Verstellbewegung, bei der sich der Abstand des zweiten Endes des Kraftübertragungselementes von der Anpreßstelle vergrößert, spiralförmig in den trommelartigen Aufnahmebehälter ein.

Grundsätzlich kann es sich bei dem Abtriebselement des erfindungsgemäßen Möbelantriebes beispielsweise um ein entlang einer linearen Bewegungsachse linear bewegliches Abtriebselement handeln. Zweckmäßigerweise ist das Abtriebselement jedoch durch einen Elektromotor der Antriebseinheit drehantreibbar, wie dies eine vorteilhafte Weiterbildung der erfindungsgemäßen Lehre vorsieht. Auf diese Weise ergibt sich ein besonders einfacher Aufbau des erfindungsgemäßen Möbelantriebs.

Eine Weiterbildung der vorgenannten Ausführungsform sieht vor, daß der trommelartige Aufnahmebehälter in Axialrichtung zu der Drehachse des Abtriebselementes versetzt angeordnet ist. Auf diese Weise ist der erfindungsgemäße Möbelantrieb besonders raumsparend und kompakt ausgebildet.

Eine andere besonders vorteilhafte Weiterbildung der vorgenannten Ausführungsformen sieht vor, daß der trommelartige Aufnahmebehälter in Drehantriebsverbindung mit dem Abtriebselement steht, insbesondere drehfest oder im wesentlichen drehfest mit dem Abtriebselement verbunden ist. Wird bei dieser Ausführungsform beispielsweise eine Schublade eines Schrankes von Hand in ihre eingezogene Position bewegt, wobei sich das Kraftübertragungselement in den trommelartigen Aufnahmebehälter hineinbewegt, so wird das Abtriebselement nicht durch einen Elektromotor der Antriebseinheit, sondern über Kraftübertragungselement von Hand drehangetrieben. Aufgrund der insbesondere im wesentlichen drehfesten Verbindung des trommelartigen Aufnahmebehälters mit dem Abtriebselement dreht sich hierbei der Aufnahmebehälter im wesentlichen synchron mit. Auf diese Weise ist die Reibung zwischen dem sich in den Aufnahmbehälter hineinbewegenden Kraftübertragungselement und dessen Innenwandung verringert. Es hat sich überraschend gezeigt, daß sich auf diese Weise das Kraftübertragungselement besonders leicht in den Aufnahmebehälter hineinbewegt, und zwar spiralartig in Form von in Axialrichtung des Aufnahmebehälters nebeneinander liegenden Windungen. Wenn die axiale Ausdehnung des Aufnahmebehälters mit einer Lage nebeneinander liegender Windungen ausgefüllt ist, so legt sich das Kraftübertragungselement über dieser Lage in einer oder mehreren weiteren Lagen von in Axialrichtung nebeneinander angeordneten Windungen in den Aufnahmebehälter ein.

Eine außerordentlich vorteilhafte Weiterbildung der erfindungsgemäßen Lehre sieht vor, daß das Kraftübertragungselement als Zahnstange ausgebildet ist, die in Eingriff mit einem Zahnrad steht, das das Abtriebselement der Antriebseinheit bildet oder in Drehantriebsverbindung mit dem Abtriebselement der Antriebseinheit steht. Bei dieser Ausführungsform befindet sich die Zahnstange, die das Kraftübertragungselement des Möbelantriebs bildet, formschlüssig in Eingriff mit einer Verzahnung des Zahnrades, das das Abtriebselement der Antriebseinheit bildet oder in Drehantriebsverbindung mit dem Abtriebselement der Antriebseinheit steht. Auf diese Weise ist ein Schlupf zwischen dem Kraftübertragungselement und dem Abtriebselement vermieden. Derartige Zahnstangen stehen als relativ einfache und kostengünstige Standardbauteile zur Verfügung und sind zur Übertragung erheblicher Kräfte geeignet. Erfindungsgemäß kann die Zahnstange beispielsweise aus Kunststoff bestehen und so dimensioniert sein, daß sie einerseits biegsam, andererseits jedoch in der erforderlichen Weise auf Zug und Druck beanspruchbar ist.

Eine andere vorteilhafte Weiterbildung der erfindungsgemäßen Lehre sieht vor, daß das Kraftübertragungselement in einer Ummantelung aufgenommen ist. Bei dieser Ausführungsform ist vermieden, daß das Kraftübertragungselement bei Druckbeanspruchung seitlich ausknickt.

Eine andere vorteilhafte Weiterbildung der erfindungsgemäßen Lehre sieht vor, daß in Montageposition des Möbelantriebs das erste und das zweite Ende des Kraftübertragungselementes winkelig zueinander angeordnet sind. Eine solche winkelige Anordnung der Enden des Kraftübertragungselementes zueinander ist erfindungsgemäß dadurch ermöglicht, daß das Kraftübertragungselement biegsam ausgebildet ist.

Die Erfindung wird nachfolgend anhand der beigefügten Zeichnung näher erläutert, in der ein Ausführungsbeispiel eines erfindungsgemäßen Möbelantriebs dargestellt ist. Dabei bilden alle in den Schutzansprüchen beanspruchten, beschriebenen oder in der Zeichnung dargestellten Merkmale für sich genommen oder in beliebiger Kombination miteinander den Gegenstand der Erfindung, unabhängig von ihrer Zusammenfassung in den Schutzansprüchen sowie unabhängig von ihrer Beschreibung bzw. Darstellung in der Zeichnung.

Es zeigt:
- Fig. 1: in perspektivischer Explosionsdarstellung ein Ausführungsbeispiel eines erfindungsgemäßen Möbelantriebs,
- Fig. 2: eine perspektivische Phantomansicht des Möbelantriebs gemäß Fig. 1,
- Fig. 3: eine andere perspektivische Phantomansicht des Möbelantriebs gemäß Fig. 1,
- Fig. 4: den Möbelantrieb gemäß Fig. 1 in Montageposition an einem Schrank und
- Fig. 5: in perspektivischer Darstellung und gegenüber Fig. 4 vergrößertem Maßstab eine Einzelheit im Bereich der Verbindung des Kraftübertragungselementes mit einer zu verstellenden Schublade.

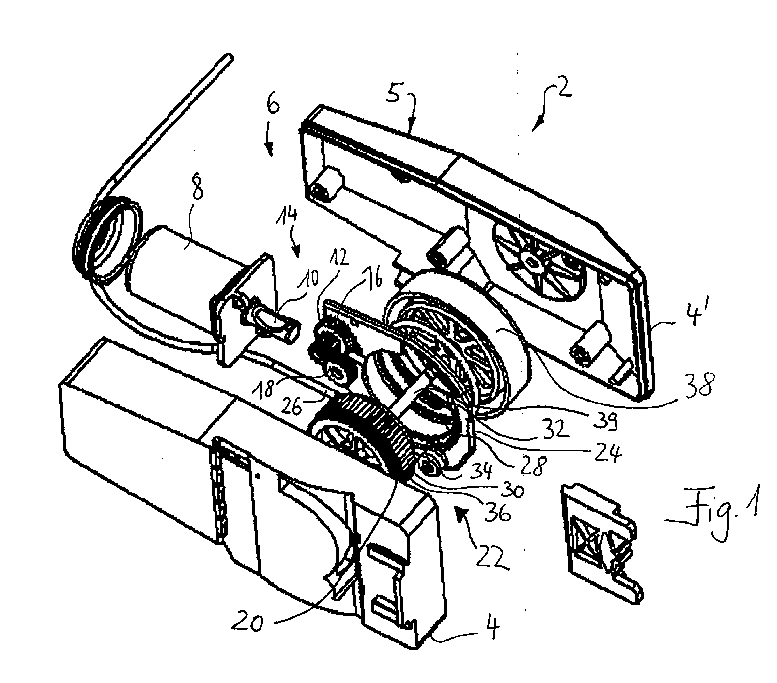

In Fig. 1 ist ein Ausführungsbeispiel eines erfindungsgemäßen Möbelantriebs 2 dargestellt, der bei diesem Ausführungsbeispiel zum Verstellen einer in Fig. 1 nicht dargestellten Schublade eines in Fig. 1 ebenfalls nicht dargestellten Schrankes dient. Der Möbelantrieb 2 weist ein durch zwei Halbschalen 4, 4' gebildetes Gehäuse 5 auf, in dem eine Antriebseinheit 6 mit einem Elektromotor 8 aufgenommen ist. Der Elektromotor 8 weist eine Abtriebswelle 10 auf, die bei diesem Ausführungsbeispiel als Schnecke ausgebildet ist und mit einem Schneckenrad 12 einer Getriebeanordnung 14 in Eingriff steht. Mit dem Schneckenrad 12 ist drehfest ein erstes Zahnrad 16 verbunden, das mit einem zweiten Zahnrad 18 kämmt, das seinerseits mit einer ersten Verzahnung 20 eines dritten Zahnrades 22 kämmt. Das Schneckenrad 12 mit dem ersten Zahnrad 16, das zweite Zahnrad 18 und das dritte Zahnrad 22 sind drehbar an einer Getriebehalterung 24 gelagert, die im Inneren des Gehäuses 5 gehalten ist.

Der Möbelantrieb 2 weist erfindungsgemäß ein biegsames, auf Zug und Druck beanspruchbares Kraftübertragungselement auf, das bei diesem Ausführungsbeispiel durch eine Zahnstange 26 gebildet ist. Die Zahnstange 26 besteht bei diesem Ausführungsbeispiel zur Erzielung der erfindungsgemäß vorgesehenen Biegsamkeit aus Kunststoff und ist in ihrem Querschnitt so dimensioniert, daß einerseits die erforderliche Biegsamkeit erzielt ist, andererseits jedoch die erforderlichen Zug- und Druckkräfte ohne Beschädigung der Zahnstange 26 übertragen werden können.

Das dritte Zahnrad 22 bildet bei diesem Ausführungsbeispiel das Abtriebselement der Antriebseinheit 6 und ist mit einer zu der ersten Verzahnung 20 in Axialrichtung des dritten Zahnrades 22 versetzten zweiten Verzahnung versehen, mit der die Zahnstange 26 in Eingriff steht.

Bei diesem Ausführungsbeispiel ist ein dem zu verstellenden Teil des Möbels zugewandtes in Fig. 1 nicht zu erkennendes erstes Ende der Zahnstange 26 an dem ebenfalls nicht zu erkennenden zu verstellenden Teil des Möbels festgelegt. Ein dem zu verstellenden Teil des Möbels abgewandtes zweites Ende 32 der Zahnstange 26 ist relativ zu dem dritten Zahnrad beweglich, also nicht an diesem festgelegt. Um die Zahnstange 26 in Eingriff mit der zweiten Verzahnung 30 des dritten Zahnrades 22 zu halten, sind Anpreßmittel vorgesehen, die bei diesem Ausführungsbeispiel eine Anpreßrolle 34 aufweisen, die die Zahnstange 26 an einer Anpreßstelle 36 an die zweite Verzahnung 30 des dritten Zahnrades 22 anpressen und die Zahnstange 26 so in Kraftübertragungsverbindung mit dem dritten Zahnrad 22 halten.

Bei dem in Fig. 1 dargestellten Ausführungsbeispiel befindet sich das zweite Zahnrad 18 in Eingriff mit der ersten Verzahnung 20 und die Zahnstange 26 in Eingriff mit der zweiten Verzahnung 30 des dritten Zahnrades 22. Erfindungsgemäß ist es jedoch auch möglich, daß das dritte Zahnrad 22 eine einzige Verzahnung aufweist, mit der sich sowohl das zweite Zahnrad 18 als auch die Zahnstange 26 in Eingriff befinden.

Zur Aufnahme eines zwischen der Anpreßstelle 36 und dem zweiten Ende 32 der Zahnstange 26 liegenden unbelasteten Teiles der Zahnstange 26 ist eine Aufnahmevorrichtung vorgesehen, die bei diesem Ausführungsbeispiel einen trommelartigen Aufnahmebehälter 38 aufweist, in den das zweite Ende 32 der Zahnstange 26 spiralförmig hineinbewegbar ist, wie dies in Fig. 1 angedeutet ist. Wie aus Fig. 1 ersichtlich, ist der trommelartige Aufnahmebehälter 38 in Axialrichtung der Drehachse des dritten Zahnrades 22 zu demselben versetzt angeordnet.

Der trommelartige Aufnahmebehälter 38 ist über eine Achse 39 drehfest mit dem dritten Zahnrad 22 verbunden, so daß er sich synchron mit dem dritten Zahnrad 22 mitdreht.

Um die Zahnstange in Axialrichtung des dritten Zahnrades 22 aus einer Ebene, in der die zweite Verzahnung 30 liegt, in eine in Axialrichtung hierzu versetzte Ebene und damit in den Aufnahmebehälter 38 zu führen, ist eine an die Getriebehalterung 24 angeformte Führung vorgesehen.

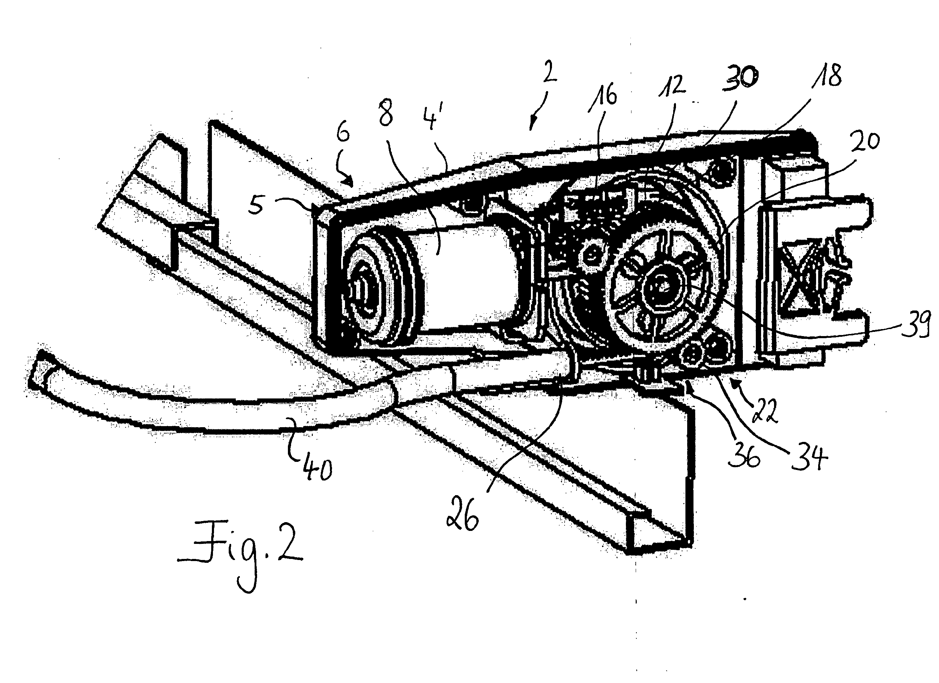

Fig. 2, in der eine Perspektivansicht des Möbelantriebs gemäß Fig. 2 dargestellt ist, zeigt eine in Fig. 1 nicht gezeigte Ummantelung 40 für die Zahnstange 26. Die Ummantelung 40 ist ortsfest angeordnet und weist eine geringere Biegsamkeit als die Zahnstange 26 auf, wobei die Zahnstange 26 seelenartig in der Ummantelung 40 aufgenommen und relativ zu der Ummantelung 40 in diese hin- und verschiebbar geführt ist. Aus Fig. 2 ist ferner ersichtlich, daß sich das zweite Zahnrad 18 in Eingriff mit der ersten Verzahnung 20 und die Zahnstange 26 in Eingriff mit der zweiten Verzahnung 30 des dritten Zahnrades 22 befindet.

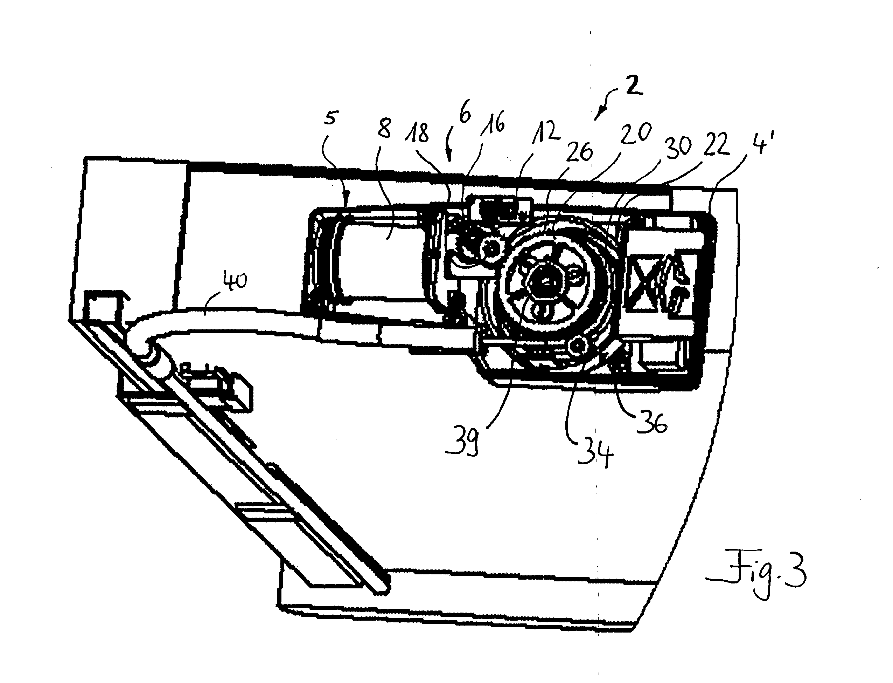

Fig. 3 zeigt eine weitere Perspektivansicht des Möbelantriebes 2, wobei erkennbar ist, daß die Anpreßrolle 34 die Zahnstange 26 an der Anpreßstelle 36 gegen die zweite Verzahnung 30 des dritten Zahnrades 22 preßt und so die Zahnstange 26 in Kraftübertragungsverbindung mit dem dritten Zahnrad 22 hält.

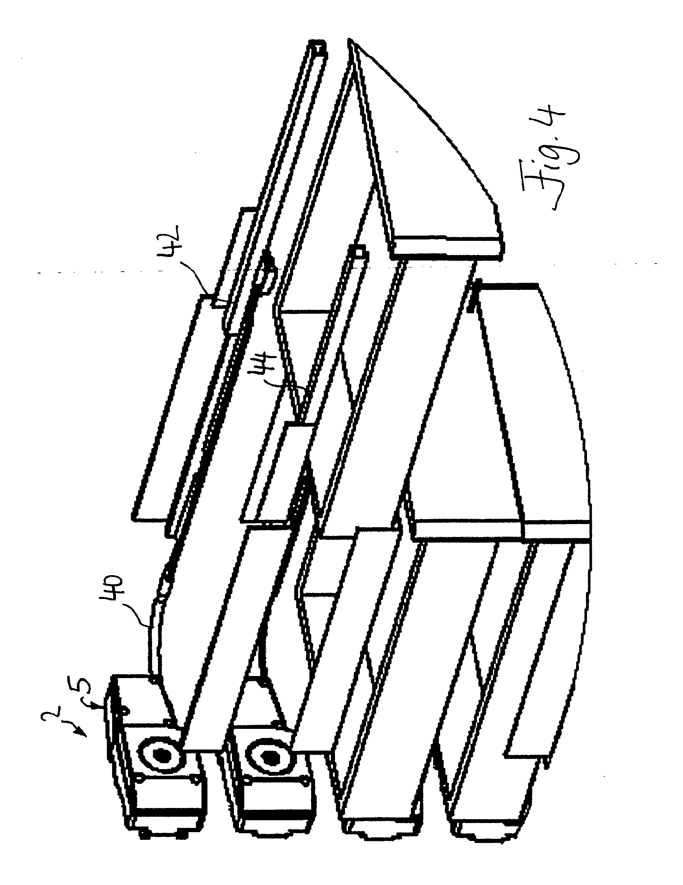

Fig. 4 zeigt den Möbelantrieb 2 in Montageposition an einem Schrank, wobei aus Darstellungsgründen Teile des Schrankes, insbesondere dessen Rückwand, an der das Gehäuse 5 des Möbelantriebs 2 befestigt ist, nicht dargestellt sind. Der Möbelantrieb 2 dient zur Verstellung einer in Fig. 4 ebenfalls nicht dargestellten Schublade, die über bewegliche Schienen 42, 44 von Teleskopschienenanordnungen ausziehbar mit dem Korpus des Schrankes verbunden ist. Wie aus Fig. 4 ersichtlich, sind bei diesem Ausführungsbeispiel die Enden der in der Ummantelung 40 aufgenommenen Zahnstange 26 winkelig zueinander angeordnet, bei diesem Ausführungsbeispiel nämlich unter einem Winkel von etwa 90°.

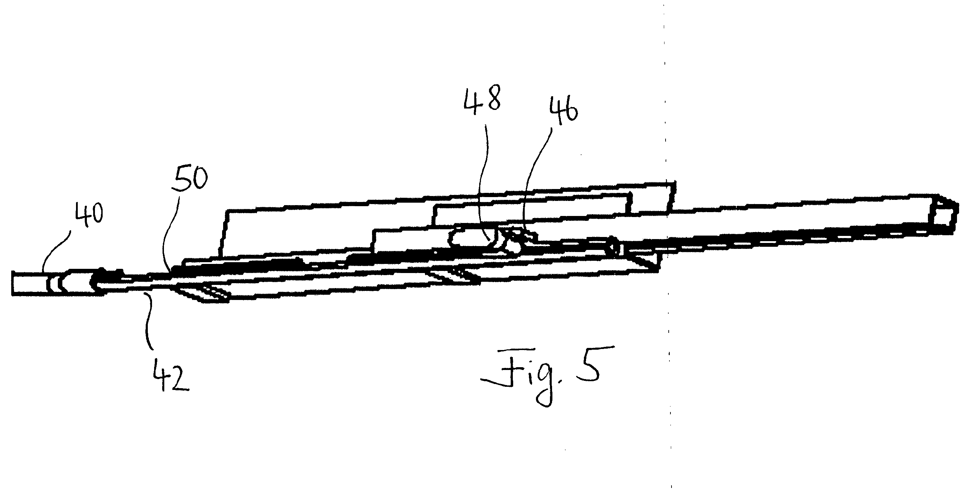

Fig. 5 zeigt eine Einzelheit im Bereich der Verbindung der Zahnstange 26 mit der beweglichen Teleskopschiene 24. Bei diesem Ausführungsbeispiel ist das erste Ende der Zahnstange 26 über einen Beschlag 46 verschiebefest mit der beweglichen Schiene 42 verbunden. Der Stift 48 ist in einem axialen Schlitz 50 der Ummantelung in Verstellrichtung, die der Axialrichtung der Ummantelung 42 entspricht, geführt.

Die Funktionsweise des erfindungsgemäßen Möbelantriebs 2 ist wie folgt:
Um die Schublade aus ihrer ausgezogenen Position, die der in Fig. 4 dargestellten Position der Zahnstange 26 entspricht, in ihre eingezogene Position zu bewegen, treibt der Elektromotor 8 das dritte Zahnrad 22 so an, daß sich dieses in Fig. 1 entgegen dem Uhrzeigersinn dreht. Hierbei wird die Zahnstange 26, die sich in Eingriff mit der zweiten Verzahnung 30 des dritten Zahnrades 22 befindet, in Fig. 4 nach links gezogen, wobei sie die bewegliche Schiene 42 und damit die Schublade mitnimmt. Die Zahnstange 26 ist hierbei durch die Anpreßrolle 34 in Eingriff mit der zweiten Verzahnung 30 gehalten, wobei ihr zweites Ende 32 sich in die Aufnahmetrommel 38 hineinbewegt und der unbelastete Teil der Zahnstange 26 sich nach und nach spiralförmig in die Aufnahmetrommel einlegt, wie dies in Fig. 1 angedeutet ist. Während dieser Verstellbewegung ist die Zahnstange 26 auf Zug beansprucht.
Um die Schublade aus der dann erreichten eingezogenen Position in die ausgezogene Position zu verstellen, treibt der Elektromotor 8 das dritte Zahnrad 22 so an, daß sich dieses in Fig. 1 im Uhrzeigersinn dreht, so daß sich die Zahnstange in Fig. 4 nach rechts bewegt, wobei sie die bewegliche Schiene 42 und damit die Schublade mitnimmt und in Richtung auf deren ausgezogene Position bewegt. Hierbei ist die Zahnstange 26 auf Druck beansprucht. Dadurch, daß die Zahnstange 26 in der Ummantelung 40 geführt ist, ist ein seitliches Ausknicken der Zahnstange 26 unter der Druckbeanspruchung vermieden. Am Ende dieser Verstellbewegung befindet sich die Schublade wieder in ihrer ausgezogenen Position, wobei sich die Zahnstange weiterhin in Eingriff mit der zweiten Verzahnung 30 des zweiten Zahnrades 22 befindet.

Bei einem Stromausfall oder einem sonstigen Ausfall der Antriebseinheit 6 kann die Schublade auch von Hand aus der ausgezogenen Position in die eingezogene Position zurückbewegt werden, indem ein Benutzer die Schublade von Hand einschiebt. Hierbei wird die Zahnstange 26 auf Druck beansprucht, wobei sie das dritte Zahnrad 22 so drehantreibt, daß sich dieses in Fig. 1 entgegen dem Uhrzeigersinn bewegt. Gleichzeitig bewegt sich das zweite Ende 32 der Zahnstange 26 in den trommelartigen Aufnahmebehälter 38 und legt sich in Form von in Axialrichtung des Aufnahmebehälters 38 aufeinanderfolgenden Windungen an die zylindrische Innenwandung des Aufnahmebehälters 38 an. Da der Aufnahmebehälter 38 über die Achse 39 drehfest mit dem dritten Zahnrad 22 verbunden ist, ist hierbei die Reibung zwischen dem zweiten Ende 32 der Zahnstange 26 und der Innenwandung des Aufnahmebehälters 38 wesentlich verringert. Auf diese Weise ist es ermöglicht, daß sich die Zahnstange 38 geordnet in Form von in Axialrichtung des Aufnahmebehälters 38 nebeneinander angeordneten Windungen an die zylindrische Innenwandung des Aufnahmebehälters 38 anlegt. Dadurch, daß die Zahnstange 26 gewisse federelastische Eigenschaften aufweist, legt sie sich beim Hineinbewegen in den Aufnahmebehälter 38 eng an dessen Innenwandung an. Wenn die Innenwandung des Aufnahmebehälters 38 auf diese Weise mit einer ersten Lage von in Axialrichtung aufeinanderfolgenden Windungen bedeckt ist, so legt sich die Zahnstange 26 darauffolgend in einer zweiten Lage von in Axialrichtung nebeneinander angeordneten Windungen in den Aufnahmebehälter 38 ein. Dieser Vorgang wiederholt sich ggf. unter Bildung weiterer Lagen so lange, bis sich die Schublade wieder in ihrer eingezogenen Position befindet. Es hat sich überraschend gezeigt, daß durch das Mitdrehen des Aufnahmebehälters 38 bei einer Drehung des dritten Zahnrades 22 die geordnete Aufnahme der Zahnstange 26 in den Aufnahmebehälter 38 wesentlich gefördert ist.

Der erfindungsgemäße Möbelantrieb 2 ist relativ einfach und kostengünstig herstellbar und bietet hinsichtlich der Anordnung des Möbelantriebes 2 an einem Korpus des Möbels größere Freiheiten als bekannte Möbelantriebe. Wie aus Fig. 4 ersichtlich ist, ist der Möbelantrieb bei dem dargestellten Ausführungsbeispiel an einer (nicht dargestellten) Rückwand des Schrankes befestigt, wobei die Enden der Zahnstange 26 winkelig zueinander angeordnet sind und bei diesem Ausführungsbeispiel einen Winkel von etwa 90° miteinander bilden.

## Patentansprüche

1. Elektromotorischer Möbelantrieb zum Verstellen von Teilen eines Möbels relativ zueinander, insbesondere einer Schublade relativ zu einem Korpus eines Schrankes,
mit wenigstens einer Antriebseinheit, deren Abtriebselement in Montageposition des Möbelantriebs mit einem zu verstellenden Teil des Möbels in Kraftübertragungsverbindung steht,
wobei das Abtriebselement mit dem zu verstellenden Teil des Möbels über wenigstens ein biegsames, auf Zug und Druck beanspruchbares Kraftübertragungselement (26) in Kraftübertragungsverbindung steht,
**dadurch gekennzeichnet,**
**daß** das Kraftübertragungselement (26) als biegsame Zahnstange ausgebildet ist, die in Eingriff mit einem Zahnrad (22) steht, das das Abtriebselement der Antriebseinheit bildet oder in Drehantriebsverbindung mit dem Abtriebselement der Antriebseinheit (6) steht und
**daß** das Kraftübertragungselement in einer Ummantelung (40) aufgenommen ist.

2. Möbelantrieb nach Anspruch 1, **dadurch gekennzeichnet, daß** ein dem zu verstellenden Teil des Möbels zugewandtes erstes Ende des Kraftübertragungselementes (26) an dem zu verstellenden Teil des Möbels festgelegt ist.

3. Möbelantrieb nach Anspruch 1 oder 2, **dadurch gekennzeichnet, daß** ein dem zu verstellenden Teil des Möbels abgewandtes zweites Ende (32) des Kraftübertragungselementes (26) relativ zu dem Abtriebselement beweglich ist und daß das Kraftübertragungselement (26) durch Anpreßmittel an wenigstens einer Anpreßstelle (36) in Kraftübertragungsverbindung mit dem Abtriebselement gehalten ist.

4. Möbelantrieb nach Anspruch 3, **dadurch gekennzeichnet, daß** ein zwischen der Anpreßstelle (36) und dem zweiten Ende des Kraftübertragungselementes liegender unbelasteter Teil des Kraftübertragungselementes (26) von einer Aufnahmevorrichtung aufnehmbar ist.

5. Möbelantrieb nach Anspruch 4, **dadurch gekennzeichnet, daß** die Aufnahmevorrichtung einen trommelartigen Aufnahmebehälter (38) aufweist, in den das zweite Ende (32) des Kraftübertragungselementes spiralförmig hineinbewegbar ist.

6. Möbelantrieb nach einem der vorhergehenden Ansprüche, **dadurch gekennzeichnet, daß** das Abtriebselement durch einen Elektromotor (8) der Antriebseinheit (6) drehantreibbar ist.

7. Möbelantrieb nach Anspruch 5 und 6, **dadurch gekennzeichnet, daß** der trommelartige Aufnahmebehälter (38) in Axialrichtung der Drehachse des Abtriebselementtes zu demselben versetzt angeordnet ist.

8. Möbelantrieb nach Anspruch 6 oder 7, **dadurch gekennzeichnet, daß** der trommelartige Aufnahmebehälter (38) in Drehantriebsverbindung mit dem Abtriebselement steht, insbesondere drehfest oder im wesentlichen drehfest mit dem Abtriebselement verbunden ist.

9. Möbelantrieb nach einem der vorhergehenden Ansprüche, **dadurch gekennzeichnet, daß** das erste und das zweite Ende (32) des Kraftübertragungselementes (26) in Montageposition des Möbelantriebs (2) winkelig zueinander angeordnet sind.

## Claims

1. Electromotive furniture drive for adjusting parts of a piece of furniture relative to one another, in particular a drawer relative to a body of a cupboard,
comprising at least one drive unit, the driven element of which in the assembled position of the furniture drive is in power transmission connection with a part of the furniture to be adjusted,
wherein the driven element is in power transmission connection with the part of the furniture to be adjusted by means of least one flexible power transmission element (26) which can be subjected to tension and compression,
**characterised in that**
the power transmission element (26) is configured as a flexible gear rack which is in engagement with a gear wheel (22) which forms the driven element of the drive unit or is in rotary drive connection with the driven element of the drive unit (6) and
**in that** the power transmission element is mounted in a casing (40).

2. Furniture drive according to claim 1, **characterised in that** a first end of the power transmission element (26) facing the part of the furniture to be adjusted is secured to the part of the furniture to be adjusted.

3. Furniture drive according to claim 1 or 2, **characterised in that** a second end (32) of the power transmission element (26) facing away from the part of the furniture to be adjusted can be moved relative to the driven element and **in that** the power transmission element (26) is held by pressing means on at least one pressing point (36) in power transmission connection with the driven element.

4. Furniture drive according to claim 3, **characterised in that** an unloaded part of the power transmission element (26) lying between the pressing point (36) and the second end of the power transmission element can be mounted by a mounting device.

5. Furniture drive according to claim 4, **characterised in that** the mounting device comprises a drum-like mounting container (38) into which the second end (32) of the power transmission element can be moved in a helical manner.

6. Furniture drive according to one of the preceding claims, **characterised in that** the driven element can be rotary driven by an electric motor (8) of the drive unit (6).

7. Furniture drive according to claim 5 and 6, **characterised in that** the drum-like mounting container (38) is arranged offset relative to the driven element in the axial direction of the rotary axis of the latter.

8. Furniture drive according to claim 6 or 7, **characterised in that** the drumlike mounting container (38) is in rotary-drive connection with the driven element, in particular is connected in a non-rotational manner or a substantially non-rotational manner to the driven element.

9. Furniture drive according to one of the preceding claims, **characterised in that** the first and the second end (32) of the power transmission element (26) are arranged at an angle to one another in the assembly position of the furniture drive (2).

## Revendications

1. Entraînement de meuble électromoteur destiné au réglage de pièces d'un meuble l'une par rapport à l'autre, en particulier d'un tiroir par rapport à un corps d'une armoire,
comprenant au moins une unité d'entraînement dont l'unité de sortie, dans la position de montage de l'entraînement de meuble, est en liaison de transmission de mouvement avec une pièce du meuble devant être réglée,
étant entendu que l'unité de sortie est en liaison de transmission de mouvement avec la pièce du meuble devant être réglée par le biais d'au moins un élément de transmission de mouvement (26) flexible pouvant être sollicité en traction et en pression,
**caractérisé**
**en ce que** l'élément de transmission de mouvement (26) est réalisé comme crémaillère flexible, qui est en prise avec une roue dentée (22) qui constitue l'élément de sortie de l'unité d'entraînement ou en liaison d'entraînement par rotation avec l'élément de sortie de l'unité d'entraînement (6), et
**en ce que** l'élément de transmission de mouvement est logé dans une gaine (40).

2. Entraînement de meuble selon la revendication 1, **caractérisé en ce qu'**une première extrémité de l'élément de transmission de mouvement (26) dirigée vers la pièce du meuble devant être réglée est fixée sur la pièce du meuble devant être réglée.

3. Entraînement de meuble selon la revendication 1 ou 2, **caractérisé en ce qu'**une deuxième extrémité (32) de l'élément de transmission de mouvement (26) dirigée à l'opposé de la pièce du meuble devant être réglée peut être déplacée par rapport à l'élément de sortie et **en ce que** l'élément de transmission de mouvement (26) est maintenu en liaison de transmission de mouvement avec l'élément de sortie à au moins un point de pression (36) par le biais de moyens de pression.

4. Entraînement de meuble selon la revendication 3, **caractérisé en ce qu'**une pièce sans charge de l'élément de transmission de mouvement (26) située entre le point de pression (36) et la deuxième extrémité de l'élément de transmission de mouvement peut être reçue par un dispositif de réception.

5. Entraînement de meuble selon la revendication 4, **caractérisé en ce que** le dispositif de réception présente un logement de réception similaire à un tambour (38), dans lequel la deuxième extrémité (32) de l'élément de transmission de mouvement peut être introduite dans une forme de spirale.

6. Entraînement de meuble selon l'une des revendications précédentes, **caractérisé en ce que** l'élément de sortie peut être entraîné en rotation par un électromoteur (8) de l'unité d'entraînement (6).

7. Entraînement de meuble selon la revendication 5 et 6, **caractérisé en ce que** le logement de réception similaire à un tambour (38) est agencé dans la direction axiale de l'axe de rotation de l'élément de sortie en position décalée par rapport à celui-ci.

8. Entraînement de meuble selon la revendication 6 ou 7, **caractérisé en ce que** le logement de réception similaire à un tambour (38) est en liaison d'entraînement par rotation avec l'élément de sortie, étant en particulier relié de façon fixe ou sensiblement fixe en rotation avec l'élément de sortie.

9. Entraînement de meuble selon l'une des revendications précédentes, **caractérisé en ce que** les première et deuxième extrémités (32) de l'élément de transmission de mouvement (26), dans la position de montage de l'entraînement de meuble (2), sont agencées dans un angle l'une par rapport à l'autre.
